# EUROPEAN PATENT APPLICATION

(11) **EP 4 301 009 A1**
(43) Date of publication of application: **03.01.2024**
(21) Application number: 23181349.4
(22) Date of filing: 26.06.2023
(51) Int. Cl.: H04W 4/40, H04L 9/40, H04W 12/122

(54) **IMPROVED COMMUNICATIONS WITHIN AN INTELLIGENT TRANSPORT SYSTEM TO DETECT MISBEHAVING ITS STATIONS**

(30) Priority: 30.06.2022 GB 202209603
(71) Applicant: CANON KABUSHIKI KAISHA, Tokyo 146-8501 (JP)
(72) Inventor: MORVAN, Isabelle, 35135 CHANTEPIE (FR); LE HOUEROU, Brice, 35690 ACIGNE (FR); NASSOR, Eric, 35235 THORIGNE-FOUILLARD (FR); RUELLAN, Hervé, 35700 RENNES (FR); GALMICHE, Benjamin, 35000 RENNES (FR); KERGOURLAY, Gérald, 35250 CHEVAIGNE (FR)
(74) Representative: Santarelli

(57) **Abstract**

According to some embodiments of the disclosure, it is provided a method of communication in an intelligent transport system, ITS, comprising at an ITS test station, sending to an ITS station, ITS-S, under test, SUT, different from the ITS test station, a request to report perception of objects within an area deemed to be monitored by the SUT, the request comprising items of information characterizing objects that perception is to be reported. In response to the request, an ITS message generated by the SUT is received, the ITS message comprising information directed to perception of objects as requested. Based on the received ITS message, it may be determined whether the SUT is misbehaving.

## Description

### FIELD OF THE DISCLOSURE

The present disclosure relates generally to Intelligent Transport Systems (ITS) and more specifically to Cooperative Intelligent Transport Systems (C-ITS).

### BACKGROUND OF THE DISCLOSURE

Cooperative Intelligent Transport Systems (C-ITS) is an emerging technology for future transportation management that aims at improving road safety, traffic efficiency and driver experience.

Intelligent Transport Systems (ITS) standards are developed by different organizations, in particular by the European Telecommunication Standards Institute (ETSI), the European Committee for Standardization (CEN), the International Organization for Standardization (ISO), and the Society of Automotive Engineers (SAE).

ITS, as defined by ETSI, include various types of communication such as:
- communications between vehicles (e.g. car-to-car) and
- communications between vehicles and fixed locations (e.g. car-to-infrastructure).

ITSs are not restricted to road transport as such. More generally, ITS may be defined as the use of information and communication technologies (ICT) for rail, water and air transport, including navigation systems. Such various types of ITS rely on radio services for communication and use dedicated technologies.

Cooperation within C-ITSs is achieved by exchange of messages, referred as to ITS messages, among ITS stations, denoted ITS-Ss. The ITS-Ss may be vehicles, Road Side Units (RSUs), Vulnerable Road Users (VRUs) carrying an ITS equipment (for instance included in a smartphone, a GPS device, a smart watch, or in a cyclist equipment), or any other entities or infrastructures equipped with an ITS equipment, as well as central subsystems (back-end systems and traffic management centers).

C-ITS may support various types of communications, for instance between vehicles (vehicle-to-vehicle or "V2V"), referring to all kinds of road users, e.g. car-to-car, or between vehicles and fixed locations such as vehicle-to-infrastructure or "V2I", and infrastructure-to-vehicle or "I2V", e.g., car-to-infrastructure.

Such message exchanges may be performed via a wireless network, referred to as "V2X" (for "vehicle" to any kind of devices) networks, examples of which may include 3GPP LTE- Advanced Pro, 3GPP 5G, or IEEE 802.11p technology (3GPP, LTE, and IEEE are Registered Trade Marks).

Exemplary ITS messages include Collective Perception Messages (CPMs), Cooperative Awareness Messages (CAMs), and Decentralized Environmental Notification Messages (DENMs). The ITS-S sending an ITS message is named "originating" ITS-S and the ITS-S receiving an ITS message is named "receiving" ITS-S.

ITS messages are often broadcast and are generally not encrypted. However, for security reasons, they can be emitted only by authorized ITS stations. The authorization is implemented through a certificate, known as Authorization Ticket (AT) generated through an operational certificate chain, which AT defines authorization for one or more operational ITS services.

A Public Key Infrastructure (PKI) mechanism is implemented to provide anonymity to the ITS stations within an ITS communication system.

The ITS message and the corresponding authorization ticket are electronically signed, before being broadcast. The AT may be provided together with the broadcast ITS message, or may be provided before or after the broadcasting. The ITS message refers to the AT, for the receiving ITS station to be able to check the whole package.

The PKI mechanism alone cannot address all cyber threats. For instance, misbehaving entities having valid Authorization Tickets can still transmit tampered data.

ETSI TS 103 759 (Intelligent Transport Systems (ITS); Security; Misbehavior Reporting service; Release 2) is defining a Misbehavior Report message format to report misbehaving entities to a Misbehavior Authority (MA) in case of detection of a misbehavior. The current draft (V0.0.8) is addressing the misbehavior for CAM and DENM ITS messages and is not yet addressing CPM ITS messages.

Collective Perception Service described in the ETSI TR 103 562 standard enables ITS stations to share information about their perceived environment with other nearby ITS stations using CPM ITS messages. Typically, a CPM contains object attributes and kinematics perceived by on-board sensors, information about the used sensor and free space areas perceived by on-board sensors.

It is noted that a malicious user may send authenticated-but-wrong data in a CPM, for example to send incorrect information such as false location information, to alert about incorrect events, or to report a bogus object endangering other road users. It is also noted that a CPM may contain erroneous data resulting from malfunctioning on-board sensors.

The document entitled "V2X Misbehavior and Collective Perception Service: Considerations for Standardization", from Mohammad Raashid Ansari, Jean-Philippe Monteuuis, Jonathan Petit, and Cong Chen, 2021 IEEE Conference on Standards for Communications and Networking (CSCN), provides an analysis of possible threats and attacks on CPMs. According to this document, examples of possible attacks on CPMs are the following:
- informing about a False Free Space Area, that is claiming an area is free of object whereas an object is inside,
- changing the perception area associated with a sensor, for example changing the detection distance from 100 m to 200 m and claiming a false object at 190 m,
- creating fake objects by copying other perceived objects contained in received CPMs from other ITS stations and modifying information, for example modifying location information, the object classification, etc., and
- attacking directly a sensor (e.g. remote blinding).

For example, U.S. Patent No. 10,878,701 discloses a system for detecting attacks on vehicle networks by comparing object data received in CPMs from at least three vehicles and by using a majority voting process to determine whether the received object data are valid data or are data corresponding to ghost object data. However, this method is not reliable since it can be bypassed by generating several CPMs (as if they were generated by several vehicles) containing similar malicious data.

It is noted that false CPM data can have a huge impact on road users that may take wrong decisions. For example, an Emergency Braking may result from signaling a ghost stationary vehicle (or fake vehicle) on the road that can create a rear collision.

In this context, there is a need to provide some mechanisms to improve the detection of misbehaving or malfunctioning ITS stations that generate erroneous CPM data in C-ITS.

### SUMMARY OF THE DISCLOSURE

The present invention has been devised to address one or more of the foregoing concerns.

According to a first aspect of the disclosure, there is provided a method of communication in an intelligent transport system, ITS, comprising at an ITS test station:
sending to an ITS station, ITS-S, under test, SUT, different from the ITS test station, a request to report perception of objects within an area deemed to be monitored by the SUT, the request comprising items of information characterizing objects that perception is to be reported,
in response to the request, receiving an ITS message generated by the SUT, the ITS message comprising information directed to perception of objects as requested, and
   based on the received ITS message, determining whether the SUT is misbehaving.

Accordingly, the method of the disclosure makes it possible to detect easily some misbehaving ITS stations.

According to some embodiments, the items of information characterizing objects that perception is to be reported comprise a list of one or more reference objects that perception is to be reported.

Still according to some embodiments, the list of one or more reference objects comprises at least one reference object present in the area deemed to be monitored by the SUT.

Still according to some embodiments, the area deemed to be monitored by the SUT is monitored by the ITS test station.

Still according to some embodiments, the received ITS message comprises a reference to at least one reference object of the list of one or more reference objects and location information of the at least one reference object, the SUT being determined as malfunctioning in response to determining that the location of the at least one reference object as known by the ITS test station is different from the location of the at least one reference object as determined by the SUT.

Still according to some embodiments, the items of information characterizing objects that perception is to be reported comprise a list of one or more reference areas wherein presence of objects is to be reported.

Still according to some embodiments, the received ITS message comprises an indication as to whether objects are perceived by the SUT in a reference area of the list of one or more reference areas, the SUT being determined as malfunctioning in response to determining that a number of objects perceived by the SUT in the reference area is different from a number of objects in the reference area as known by the ITS test station.

Still according to some embodiments, the list of one or more reference objects comprises at least one reference fake object not present in the area deemed to be monitored by the SUT.

Still according to some embodiments, the behavior of the SUT is determined as being malicious in response to identifying a reference to the at least one reference fake object in the received ITS message.

Still according to some embodiments, the list of one or more reference objects comprises at least one reference stationary object present in the area deemed to be monitored by the SUT.

Still according to some embodiments, the SUT is determined as malfunctioning or as being malicious in response to determining that the received ITS message does not comprise any reference to the at least one reference stationary object.

Still according to some embodiments, the received ITS message comprises a reference to the at least one reference stationary object and location information of the at least one reference stationary object, the SUT being determined as malfunctioning in response to determining that the location of the at least one reference stationary object as determined by the SUT is not correct.

Still according to some embodiments, the method further comprises identifying the area deemed to be monitored by the SUT, as a function of ITS messages previously received from the SUT.

Still according to some embodiments, the behavior of the SUT is determined as being malicious in response to determining that the received ITS message comprises a perceived object and location information of the perceived object and to determining that the perceived object is located outside the identified area.

According to a second aspect of the disclosure, there is provided a method of communication in an intelligent transport system, ITS, comprising at an ITS station, ITS-S, under test, SUT:
receiving, from an ITS test station, different from the SUT, a request to report perception of objects within an area deemed to be monitored by the SUT, the request comprising items of information characterizing objects that perception is to be reported,
carrying out measurements using at least one on-board sensor to perceive objects as requested, and
generating and transmitting to the ITS test station an ITS message, the ITS message comprising information directed to perceived objects.

This aspect of the disclosure has advantages similar to those mentioned above.

Still according to some embodiments, the generated ITS message comprises information directed to an object referenced in the received request, the object referenced in the received request being not perceived by the SUT.

Still according to some embodiments, the area deemed to be monitored by the SUT is not monitored by the SUT.

According to other aspects of the disclosure, there is provided a device configured for carrying out each of the steps of the method described above and a non-transitory computer-readable medium storing a program which, when executed by a microprocessor or computer system in an Intelligent Transport System station, ITS-S, causes the ITS-S to perform each step of the method described above.

These aspects of the disclosure have advantages similar to those mentioned above.

At least parts of the methods according to the disclosure may be computer implemented. Accordingly, the present disclosure may take the form of an entirely hardware embodiment, an entirely software embodiment (including firmware, resident software, microcode, etc.) or an embodiment combining software and hardware aspects that may all generally be referred to herein as a "circuit", "module" or "system". Furthermore, the present disclosure may take the form of a computer program product embodied in any tangible medium of expression having computer usable program code embodied in the medium.

Since the solutions of the present disclosure can be implemented in software, the solutions of the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g., a microwave or RF signal.

### BRIEF DESCRIPTION OF THE DRAWINGS

Further advantages of the present invention will become apparent to those skilled in the art upon examination of the drawings and detailed description. Embodiments of the invention will now be described, by way of example only, and with reference to the following drawings.
**Figure 1** illustrates an example of an ITS in which embodiments of the disclosure may be implemented,
**Figure 2** illustrates security mechanisms implemented in an ITS,
**Figure 3** illustrates the verification of a received ITS message based on a digital signature and an authorization ticket,
**Figures 4** and **5** illustrate examples of a flow of messages exchanged during a perception challenge request - response sequence, between a Challenge Test System (CTS) and a System Under Test (SUT), according to a first and a second embodiments, respectively,
**Figure 6** illustrates an example of the format of a perception challenge request message,
**Figure 7** illustrates an example of the format of a perception challenge response message,
**Figure 8** illustrates an example of steps of a challenge test procedure initiated by a challenge test system which may by a central ITS station or a RSU, in the central ITS station or the RSU,
**Figure 9** illustrates an example of steps of a challenge test procedure, in an ITS Station Under Test,
**Figure 10** illustrates an example of steps of a challenge test procedure, in a Challenge Test System, to process a perception challenge response message received from a SUT,
**Figure 11** illustrates an example of an ITS wherein several objects that perception can be requested to challenge a SUT are represented, and
**Figure 12** illustrates an example of a communication device, configured to implement at least one embodiment of the present disclosure.

The same references are used across different figures when designating same elements.

### DETAILED DESCRIPTION

According to some embodiments of the disclosure, a perception challenge request (following a similar principle to captcha ("Completely Automated Public Turing test to tell Computers and Humans Apart")) is addressed to an ITS Station Under Test (SUT, also denoted System Under Test) having a Collective Perception Service (i.e., the SUT may transmit CPM ITS messages). This perception challenge request comprises items of information characterizing objects that perception is to be reported. Such items of information may comprise a list of reference objects that the SUT should be able to perceive in an area known by a Challenge Test System (CTS) and/or a list of reference areas deemed to be monitored by the SUT, also known by the CTS. The SUT should thus provide a response to the perception challenge request with a measurement report containing the requested reference objects and the status of the requested reference areas. The CTS may then analyze the response content in view of the request to determine whether the SUT is answering correctly. An ITS station which does not respond to a challenge request may become "suspect" and its trust level may be decreased.

Still according to some embodiments of the disclosure, data directed to one or more bogus objects (or fake objects) and/or bogus areas (or fake areas) are added to the list of reference data contained in the perception challenge request to make it possible to detect attackers that would be answering by regenerating plausible data using other broadcast ITS Messages (CAM, CPM, DENM, or other not encrypted messages). In addition, the list of reference data contained in the perception challenge request may comprise some objects of a type that should not be considered in the content of non-encrypted ITS Messages such as road signs or test patterns that could be installed in some specific areas (e.g. tolling zone entrance), making it possible to verify that the SUT is located where it claims to be. Indeed, an ITS station which is not physically present or which do not have the required sensors to perceive the requested objects or the space areas cannot respond with the correct data.

Accordingly, the perception challenge request - response process makes it possible to identify misbehaving ITS stations, and a Misbehavior Report message can then be triggered to report to Misbehavior Authority in order to revoke the Authorization Tickets used by the misbehaving ITS station. This is an additional mechanism to detect malicious CPM, which participates to improve the global trust in the ITS messages that contribute to improving the safety of the road users.

As mentioned above, ITS messages are generally not encrypted when exchanged on V2X communications. However, the integrity of ITS messages can be verified as a digital signature is provided by the sending ITS station. This signature is based on digital certificates owned by the originating station. For this purpose, each station receives one or more certificates through a Public Key Infrastructure (PKI). These certificates aim at ensuring that the originating ITS station has the privilege/authorization to transmit specific ITS messages. It is noted here that privacy is ensured within the PKI mechanism thanks to the two following principles:
- pseudonymity, which ensures that an ITS station may use a resource or service without disclosing its identity but can still be accountable for that use and
- unlinkability, which ensures that the greater the distance in time and space between two transmissions from a same device, the harder it is to determine that those two transmissions did in fact come from the same device.

To that end, the ITS stations are provisioned with a set of Pseudonym Certificates referred to as authorization tickets (AT) delivered by a certification authority. Thus, when exchanging ITS messages within the ITS network, each ITS message, made of an unencrypted message, is accompanied with a given AT and a digital signature that validate the authenticity of the transmitting ITS station and the integrity of the message. The anonymity of the transmitting ITS station is ensured because each AT is associated with a pseudonym, also called ITS identifier, used by the ITS station to communicate within the ITS.

Besides, ATs are regularly changed according to a temporal AT change strategy performed by each ITS station. Therefore, as the change of AT causes the change of the pseudonym and the digital signature used by the station, a regular change of AT over time makes the tracking by the receiving stations very difficult or impossible, in a classic operating mode of the ITS. Indeed, typically, the stations of the ITS (the vehicles or the vulnerable road users VRU) may share their current state (such as their position, speed, acceleration, etc.) using a Cooperative Awareness Message (CAM), for example as defined in the ETSI EN 302 637-2, (or VRU Awareness Messages (VAM), for example as defined in ETSI TR 103 300). Such messages are received by the receiving ITS stations and help them to determine their local environment.

The disclosure will now be described by means of specific non-limiting exemplary embodiments and by reference to the Figures.

### ITS system and ITS stations

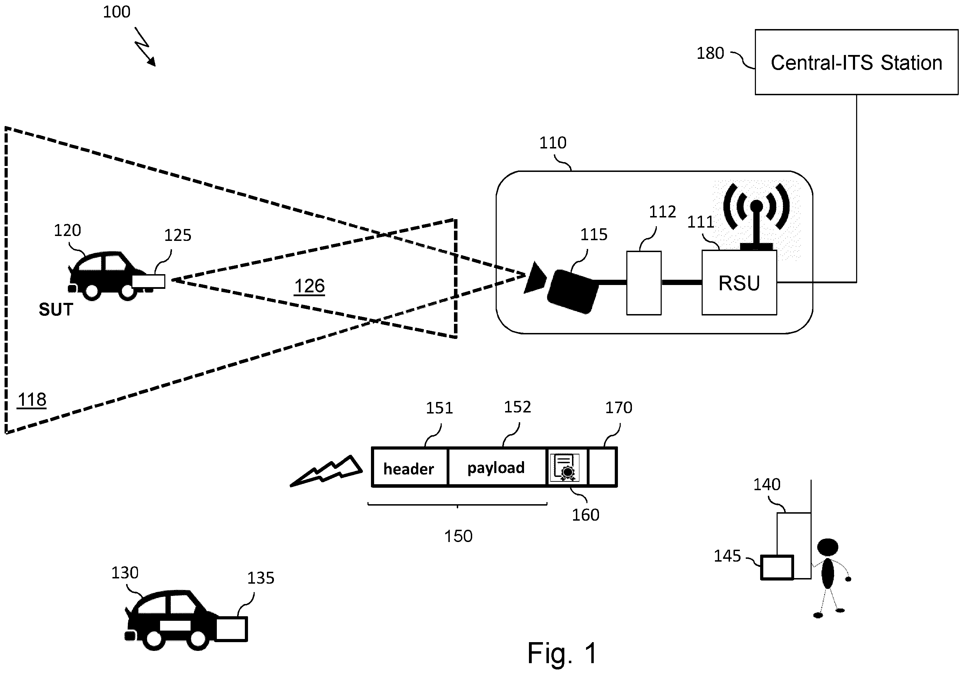

**Figure 1** illustrates an example of an ITS in which embodiments of the disclosure may be implemented.

As illustrated, ITS 100 comprises a plurality of stationary and mobile ITS stations, in particular an ITS station of stationary road side entity 110, mobile ITS stations (or on-board units (OBUs)) associated with vehicles 120 and 130, mobile ITS station (or OBU) embedded within mobile phone 140, and central-ITS Station 180. An ITS station embedded within a vehicle is referred to as a 'vehicle ITS station' and an ITS station carried by a pedestrian or a cyclist is referred to as 'VRU (Vulnerable Road User) ITS station'. As illustrated, stationary road side entity 110 contains a road side unit (RSU) 111 also having a roadside ITS station. The central-ITS station 180, is an example of central subsystem that may also form part of ITS 100. Other subsystems (not shown), such as back-end systems and traffic management centers, may also form parts of ITS 100.

Version V1.1.1 of the ETSI EN 302 665 specification defines a reference architecture of an ITS station.

An ITS station may embed or may be linked to one or more local sensors that may provide information about the ITS station position and/or motion or analyze or scan an area in the vicinity of the ITS station to detect objects.

For the sake of illustration, vehicle 120 embeds perception sensor 125, vehicle 130 embeds perception sensor 135, and mobile phone 140 embeds perception sensor 145. Perception sensors 125, 135, and 145, referred to as embedded perception sensors, may be of different types, for example they may be cameras, radars, radios, or LIDARs, that can be combined (e.g., a vehicle may embed several cameras and several LIDARs). For the sake of illustration, perception sensor 125 may be a video camera monitoring area 126. The output of the embedded perception sensors may be a list of perceived objects and corresponding description items of information.

Similarly, stationary road side entity 110 embeds a Roadside Surveillance Monitoring System (RSMS) 112. RSMS 112 includes in particular a set of perception sensors, here video camera 115 monitoring area 118 and a Video Content Analytics (VCA) module (not represented). The VCA module may analyze video streams captured by the sensor or video camera 115 in order to detect objects, referred to as perceived objects, to monitor the state of areas, referred to as free spaces, and to output lists of detected objects and/or of free spaces with corresponding description information. It is noted that since RSMS 112 and RSU 111 may be connected through wires, RSMS 112 may be considered as an embedded perception sensor for RSU 111.

Description information of a perceived object may include its dynamic state and properties (for instance a position, a speed, an acceleration, a class, a dimension, an age, etc.). Description information of a free space may include its state and its geometry (for instance a confidence level that the space is free or a state of the space as well as a description of the geometry of the free space).

Cooperation within ITS 100 may be achieved through exchange of ITS messages between the ITS stations: V2V (vehicle-to-vehicle) messages, V2I (vehicle-to-infrastructure) messages, and/or I2V (infrastructure-to-vehicle) messages. Various types of ITS messages exist to share information, alert, inform, and/or warn users and/or vehicles of ITS 100. As illustrated, an ITS message like ITS message 150 comprises a header 151 (including multiple fields) and a payload 152. Such an ITS message may be accompanied with a Pseudonym Certificate, for example Pseudonym Certificate 160, and a digital signature, for example digital signature 170.

There exist several types of ITS messages, in particular the following:
- Cooperative Awareness Message (CAM), for example as defined in the version 1.3.1 of the ETSI EN 302 637-2 specification, that may be sent by any originating vehicle ITS station to share information about itself with the other ITS stations, for instance its current state (e.g. position, speed, length, width, and angle). A CAM may be sent by a corresponding operational service (or application) in the facility layer of the ITS protocol stack of the ITS station, namely the Cooperative Awareness basic service,
- Vulnerable Road User Awareness Message (VAM), for example as defined in version 2.1.1 of ETSI TS 103 300-3 specification, that may be sent by any originating VRU ITS station to share information about itself with the other ITS stations, for instance its current state (e.g. position, speed, length, width, and angle),
- Decentralized Environmental Notification Message (DENM), that may be sent by an originating ITS station to alert receiving ITS stations of an event. A DENM is sent by a corresponding operational service in the facility layer of the ITS protocol stack of the ITS station, namely the Decentralized Environmental Notification basic service, and
- Collective Perception Message (CPM) for example as defined in the version 2.1.1 of the ETSI TR 103 562 specification and/or in the version 0.0.22 of the ETSI TS 103 324 specification, that may be sent by any originating ITS station to share its perceived environment retrieved from its embedded perception sensors with receiving ITS stations. A CPM is sent by a corresponding operational service in the facility layer of the ITS protocol stack of the ITS station, namely the Collective Perception basic service.

All exchanged messages may be encoded using for example the ASN.1 Unaligned Packed Encoding Rules as defined in Recommendation ITU-T X691/ISO/IEV 8825-2.

To secure V2X communications within ITS 100, a Public-Key-Infrastructure (PKI) (for example as defined in the version 1.1.1 of the ETSI TS 102 731 specification) may be used to enable a receiving station to make some verification to trust the originating ITS station. As described above, the PKI-based security may be implemented through the use of certificates delivered by a certification authority to the ITS stations. Accordingly, each ITS message comprises a non-encrypted message (e.g. ITS message 150) accompanied with a digital signature (e.g. digital signature 170) and a Pseudonym Certificate (e.g. a Pseudonym Certificate 160) that validate the authenticity of the originating ITS station and the integrity of the message, while keeping anonymity of the originating ITS station. The digital signature 170 may be computed (e.g. as the result of a hash function) from the corresponding ITS message 150 and the corresponding Pseudonym Certificate 160 (e.g. on a concatenation thereof). The Pseudonym Certificate 160 may be delivered by a certification authority. Such a certificate may be referred to as an authorization ticket. It ensures that the originating ITS station has the privileges and authorizations to transmit specific ITS messages. The authorization ticket may be verified by the receiving ITS station.

Basically, an ITS station is required to obtain specific credentials from dedicated certification authorities in order to access the ITS network 100 and make full use of the available ITS application, services, and capabilities, such as sending ITS messages. The certificate may depend on the capabilities of the ITS station (for instance its sensors or the Video Content Analytics (VCA) it can run) but also the role and the security level of the owner of the station. For example, only an ITS station with sensors with a sufficient quality of detection of a pedestrian and/or a cyclist may be authorized to send CPM messages containing VRU information. Still for the sake of illustration, the trust level associated with a certificate may be increased when it can be shown that the equipment used to generate and to transmit messages is regularly controlled against hacking.

### Use of certificates to exchange messages within an ITS

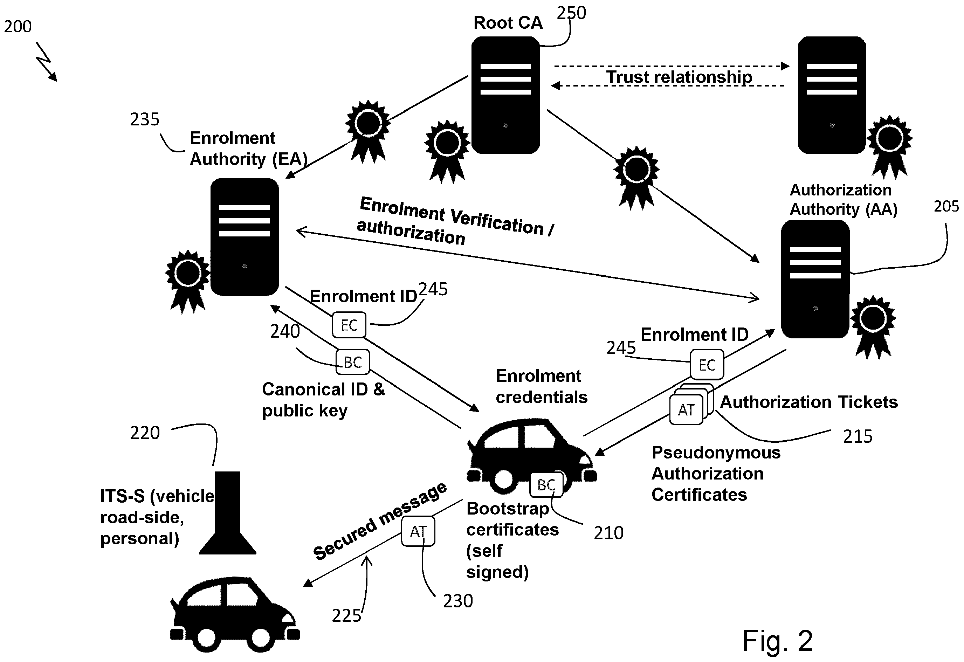

**Figure 2** illustrates an example of a PKI-based mechanism. The PKI-based security is implemented through the use of certificates delivered by a certification authority to the ITS stations.

As part of the ITS station manufacturing process, a set of information elements 240 associated with the identity of the ITS station is established within the ITS station itself and within a so-called Enrollment Authority (EA) 235, for example as defined in the version 1.2.1 of the ETSI TS 102 941 specification. The set of information elements 240 is then registered within the ITS station and the EA 235.

As an example, the set of information elements 240 may comprise:
- a canonical identifier, that is an identifier uniquely identifying the ITS station (i.e. the canonical identifier is equivalent to the ITS station identity), and
- a public/private key pair for cryptographic purpose based on PKI mechanism.

Based on this set of information elements, Enrollment Authority 235 may generate an Enrollment Certificate 245 which contains a pseudonym provided to the ITS station during the enrollment process. The pseudonym is used for anonymity and is referred to as Enrollment Identity (Enrollment ID).

Next, after having enrolled with EA 235, the ITS station requests an Authorization Authority (AA) 205 for specific services and permission within the EA's domain and AA's Authorization context. In particular, AA 205 checks Enrollment Certificate 245 included in the request (more specifically, AA checks the Enrollment ID included in Enrollment Certificate 245). Then, if Enrollment Certificate 245 is suitable, AA 205 provides multiple Pseudonym Certificates referred to as Authorization Tickets (AT) 215. Each AT 215 includes a pseudonym of the ITS station to be used in V2X communication, to ensure its privacy when interacting within the ITS network.

From this security procedure, an ITS station 210 selects an AT among its available multiple ATs 215 for a given period before switching to another AT in order to prevent the linkability. The change of AT may be performed according to an AT change strategy.

The message 225 sent by the ITS station 210 together with the AT 230 corresponds to message 150 with AT 160 (the digital signature 170 is not shown in Figure 2).

Rather than accompanying the ITS message 225 with AT 230, ITS message 225 may contain a link to the AT 230 used, which is transmitted by other means, e.g. in a different message or using another transmission mean (prior to the ITS message or after the ITS message is sent, e.g. upon request from the receiving ITS station).

The pseudonym ITS identifier from the selected AT 230 may also be indicated in the header of the ITS message 225. In variants, an ID value linked to the ITS pseudonym may be indicated in the ITS message header, selected by the transmitting ITS station 210. Thus, the change of the value of the ID reflects the change of the selected AT 230 and the associated pseudonym.

An ITS station may thus have several valid certificates in the same time, all having different pseudonyms. The station can then select different certificates for different messages. Due to multiple pseudonyms, this may allow avoiding station tracking and thus ensure privacy protection. In addition, as a certificate contains a list of several authorizations, different authorizations may be used by a station depending of the particular context.

When receiving a message 225, the receiving ITS station 220, verifies the AT 230 in order to ensure that the transmitting ITS station 210 has the privileges and authorizations to transmit specific ITS messages 225.

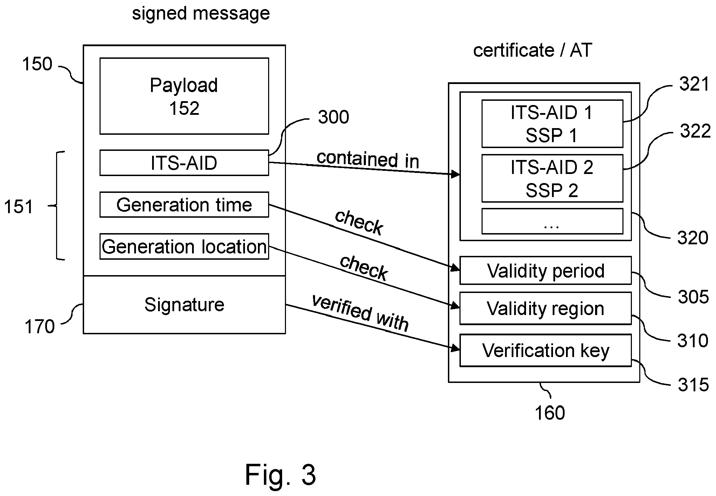

**Figure 3** illustrates verification of a signed message (i.e. a message accompanied with a digital signature).

The structure of the signed message 150 and its certificate AT 160 is described in Annex A.2 of the version 2.0.1 of the ETSI TS 103 097 specification. The structure of the certificate is a particular usage of the general signature defined in the specification IEEE 1609.2 and it is similar to the signature system defined in SAE J2945.

As illustrated, the signed message comprises the message 150 to be signed and the corresponding signature 170. The data to be signed comprise the payload 152 of the message and a header 151 comprising an ITS Application IDentifier (ITS-AID) 300 of the ITS application or service having generated the message and optionally other items of information such as the generation time and the generation location, which can be omitted, in particular if they can be deduced or inferred from the payload content. The signature 170 contains an identifier of the signer, i.e. the ITS-S ID (IDentifier) which is the pseudonym used by the originating ITS station, and an encrypted hashed value of the data being signed.

The pseudonym ITS-S ID allows the corresponding AT 160 to be retrieved by the receiving ITS-S. In other words, the pseudonym can be used as a reference to AT 160. For the sake of illustration, AT 160 may be requested by the receiving ITS station to an Authorization Authority or may be obtained from a secure memory if it has been received previously. As already described, the emitter (originating) station may have several identifiers or pseudonyms attributed by the Authorization Authority and thus, it may obtain as many certificates as identifiers or pseudonyms.

The certificate may specify an authorized period of time, an authorized location, and a list of authorized applications with specific permission.

For instance, AT may 160 contain a validity period 305, a validity region 310, and a verification key 315. The verification key allows verification of the correctness of the encrypted hashed value included in the digital signature 170 (e.g. in digital signature 170). As illustrated, AT 160 also contains a list 320 of one or more application or service permission (e.g. application or service permission 321 and 322), each comprising an ITS Application IDentifier (e.g. ITS-AID 1 and ITS-AID2) defining the authorized ITS service and a Service Specific Permission (e.g. SSP1 and SSP2) defining permission for the corresponding authorized ITS service.

The ITS AID identifies an ITS service or application which uses some types of messages, that is authorized by AT 160. Currently in ETSI TS 102 965 V1.4.1, one ITS AID is defined per message type (for example CAM, DENM, CPM, and VAM), i.e. per operational ITS service. The allocation of ITS AID values to the ITS services may be defined by a predefined allocation scheme, as the one provided in ISO/TS 17419. The ITS AID may be encoded over 1 to 4 bytes. The shorter the ITS AID, the more critical the corresponding ITS service. For example, ITS AID equal to 36 (or 0x24) is assigned to the CA basic service, while ITS AID equal to 37 (or 0x25) is assigned to the DEN basic service

AT 160 thus provides the list of ITS messages that the ITS station is authorized to send.

As illustrated in Figure 3, digital signature 170 may be checked by using verification key 315, for example by computing again the result of a hash function applied to the ITS message 150 and AT 160 and by comparing the result with the hash value provided in the digital signature.

The time and location of ITS message 150 can also be checked with regard to the validity period 305 and validity region 310, respectively.

The authorization is also checked using ITS-AID 300 of the ITS message: the message can be processed only if ITS-AID 300 is present in the list 320 of permission. In the affirmative, an additional check of the content of the message payload 152 with the SSP associated with the ITS-AID can be made to ensure e.g. the emitting ITS station has authorization to provide the payload data.

### Perception challenge request - response

According to some embodiments of the disclosure, the perception challenge request - response mechanism aims et detecting an attacker having valid Authorization Tickets but generating misbehaving ITS messages, especially CPMs. According to the example illustrated in Figure 1, an attacker equipped with a malicious ITS station may re-use information collected from CAMs generated by the ITS station associated with vehicle 130, from VAMs generated by the mobile phone of pedestrian 140, and/or from CPMs generated by stationary ITS station 110 to generate a plausible CPM, as if the malicious ITS station was located in this area and to emulate ITS station 120. In addition, the attacker can modify some part of the plausible CPM to add malicious data in this CPM. According to some embodiment of the invention, it is possible to challenge the perception of an ITS station emitting CPMs, by asking this ITS station to answer a perception challenge request (that may also be denoted challenge test request) with a perception challenge response (that may also be denoted challenge test response).

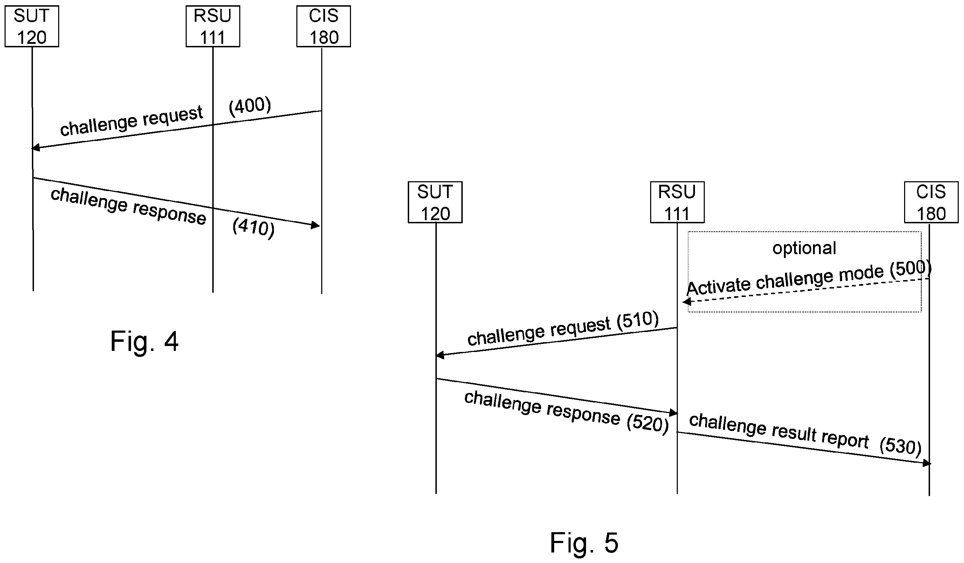

**Figure 4** illustrates an example of a flow of messages exchanged during a perception challenge request - response sequence, between a Challenge Test System (CTS) and a System Under Test (SUT), according to a first embodiment. According to this example, the perception challenge request is initiated by a central ITS station, for example central ITS station 180 in Figure 1, the central ITS station sending a perception challenge request message to the SUT, for example the SUT associated with vehicle 120 in Figure 1, using a unicast encrypted message (step 400). An advantage of sending the perception challenge request message as a unicast encrypted message is that attacker cannot learn the algorithm of the Challenge Test System used to add "fake" object data in the messages.

Next, the SUT preferably answers the perception challenge request message by a perception challenge response message using a similar communication scheme (unicast encrypted messages), transmitted via a RSU, for example via RSU 111 (step 410).

As disclosed above, a lack of response to the perception challenge request message may be interpreted as a misbehaving sign that may lead to decrease a trust level associated with the SUT.

**Figure 5** illustrates an example of a flow of messages exchanged during a perception challenge request - response sequence, between a Challenge Test System (CTS) and a System Under Test (SUT), according to a second embodiment. According to this example, a central ITS station, for example central ITS station 180 in Figure 1, may request a RSU, for example RSU 111 in Figure 1, to initiate the perception challenge request- response mechanism (step 500). Upon receiving this request or on its own, the RSU sends a perception challenge request message to the SUT, for example the SUT associated with vehicle 120 in Figure 1 (step 510). In response, the SUT preferably answers the perception challenge request message by a perception challenge response message using a similar communication scheme (step 520). As disclosed above, a lack of response to the perception challenge request message may be interpreted as a misbehaving sign that may lead to decrease a trust level associated with the SUT. Next, the RSU generates a challenge result report to the CIS (step 530).

The perception challenge request message and the perception challenge response message may be unicast encrypted messages or may be messages transmitted using the ITS Test Mode Message service, for example as defined in the ETSI TR 103 573 standard (e.g. in its version V.1.1.1, dated November 2019).

### Perception challenge request - response messages

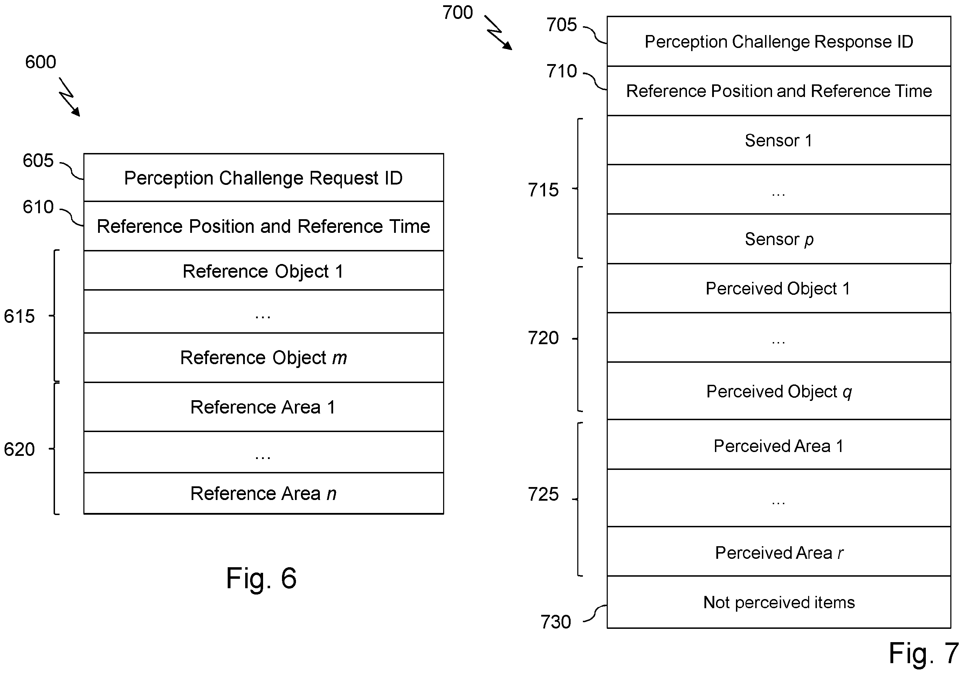

**Figure 6** illustrates an example of the format of a perception challenge request message. As illustrated, a perception challenge request message such as perception challenge request message 600 may comprise:
- a perception challenge request ID, referenced 605, which is a unique identifier of the request. It may comprise the concatenation of a test sequence number, with an identifier of the SUT (SUT ITS ID) and a message request type,
- a reference position and a reference time of the message, referenced 610, which corresponds to the location of the ITS when sending the perception challenge request message and the time at which the message is generated,
- a list of reference objects with their attributes, referenced 615, for example a list of m objects, as illustrated, for which the receiving ITS-S is requested to provide information such as a location, the type sensors used to perceive the object, etc., and/or
- a list of reference areas with their attributes, referenced 620, for example a list of *n* objects, as illustrated, for which the receiving ITS-S is requested to provide a status such as whether it is free or it comprises perceived objects, etc.

Each reference object may be referenced or defined with some attributes are similar to the ones defined in the Collective Perception Service Technical Report TR 103 562 (for example in its version V2.1.1 dated December 2019). The attributes of the reference objects listed in a perception challenge request message may be the following (or some of the following):
- *objectID*, which is an identifier assigned to the reference object,
- *time Of Measurement,* which is an indication of the time at which the object attributes were measured. It may correspond to the time difference between the time at which the object attributes were measured and the reference time set in the management header part. In some embodiments of the disclosure, the *time Of Measurement* can be directly set as an absolute time value,
- the distance defined by *xDistance*, *yDistance*, and *zDistance* (optional), that corresponds to the distance between the perceived object and the reference position defined in the management header the in *x*, *y, z*-direction of the ITS-S coordinate system, respectively, at the time of measurement. In some embodiments of the disclosure, the distance can be replaced by the geographical coordinates of the objects,
- the speed defined by *xSpeed*, *ySpeed* and *zSpeed* (optional), which corresponds to the speed of the perceived object in the detecting ITS-S's reference system in the *x*, *y, z-*direction, respectively, at the time of measurement,
- the dimension (optional) defined by *planarObjectDimension1*, *planarObjectDimension2,* and *verticalObjectDimension*, which it represents the dimension of the reference object, and/or
- *classification*, which provides the classification of the reference object. It may be composed of an object class (e.g. vehicle class, Vulnerable Road User (VRU) class, etc.) and possibly a subclass (e.g. vehicle class has subclasses passengerCar, bus, etc.).

In addition, in order to improve robustness with regards to attackers that would clone CPMs or parts of CPMs obtained by listening to CPMs transmitted by other nearby ITS stations, other types of objects than those that are generally transmitted within broadcast and non-encrypted ITS messages may be listed in perception challenge request messages. Examples of such objects comprise road signs, traffic light poles, test patterns that could be installed in some specific zone controlled by authorities (e.g. tolling zone entrance), etc.

Each of the reference space areas listed in a perception challenge request message may be referenced or defined using some or all the following attributes:
- *areaID*, which is an identifier assigned to the reference area,
- *areaState*, which is a state of the reference area. For the sake of illustration, it may be expressed in a binary form where the 0-value indicates a free space area and the 1-value indicates an area containing perceived objects. According to another example, *areaState* corresponds to the number of objects perceived into the area. Still for the sake of illustration, the *areaState* value may be a *FreeSpaceAreaConfidence* value according to which the value 100 indicates a free space area with a confidence level of 100%, and/or
- *spaceArea*, which represents the geometry of the area. It can be defined using the Geographical Area Definition of the area according to ETSI EN 302 931 standard (for example in its version V1.1.1 dated July 2011) or using a list of nodes and reference geographic reference points (e.g., of the WGS84 North type) as defined in ISO 19061 standard.

For the sake of efficiency, the reference objects and the reference areas are preferably selected within a geographical area corresponding to the detection area of the on-board sensor of the SUT, for example detection area 126 of on-board sensor 125 of SUT 120 in Figure 1.

In response to a perception challenge request message such the one illustrated in Figure 6, a SUT provides a perception challenge response message (or perception report) for the requested reference objects and areas, such as the one illustrated in Figure 7.

It is noted that determining a detection area such as detection area 126 in Figure 1, may be done by the Challenge Test System by using the CPMs transmitted by the SUT and by analyzing the Sensor Information Container part of the received CPMs. The Sensor Information Container provides information about the sensor capabilities of an ITS Station such as the sensor type (e.g, LiDAR, monovision, etc.) and the sensor detection area. If no Sensor Information Container is obtained, then a default detection area can be defined around the SUT with some typical sensor detection area dimension and the SUT can precise in the perception challenge response message what is its detection area.

**Figure 7** illustrates an example of the format of a perception challenge response message. As illustrated, a perception challenge response message such as perception challenge request message 700 may comprise:
- a perception challenge response ID, referenced 705, which is a unique identifier of the response. It may comprise the concatenation of a test sequence number, with an identifier of the SUT (SUT ITS ID) and a message response type,
- a reference position and a reference time of the message, referenced 710, which corresponds to the location of the SUT when sending the perception challenge response message and the time at which the message is sent,
- a list of sensors, referenced 715, used for carrying out measurements in order to perceive objects listed in the received perception challenge request message,
- a list of perceived objects with their attributes, referenced 720, corresponding to the reference objects of the list received in the perception challenge request message or to some objects of this list (e.g., in a case according to which all the objects have not been perceived by the SUT),
- a list of perceived areas with their attributes, referenced 725, corresponding to the reference areas of the list received in the perception challenge request message or to some areas of this list (e.g., in a case according to which a sensor is not working properly), and/or
- a list of not perceived items (objects or areas), referenced 730, within the reference object and area lists received in the perception challenge request message.

For each sensor used by the SUT to perceive the objects and the area states, the perception challenge response message may contain items of information similar to the Sensor Information Container provided in CPMs as described, for example, in Collective Perception Service Technical Report TR 103 562:
- sensor ID, which is an identifier of the sensor,
- sensor type, which is the type of the sensor (e.g., LiDAR, radar, monovision, etc.),
- detection area, which may be defined as a polygon area with a list offset points from the reference position set in the management header, and
- free space confidence, which represents a confidence level as to whether the detection area is free or not.

The perceived object attributes may be similar to the one provided in the perception challenge request message, the values of which corresponding to the one measured by the on-board sensor of the SUT, with some additional information such as which sensors were used to perceive this object:
- *objectID*, which is the identifier corresponding to the reference object in the perception challenge request message,
- *sensorIDlist*, which comprises references to the sensor IDs used for perceive the object,
- *time Of Measurement,* which is an indication of the time at which the object attributes were measured. It may correspond to the time difference between the time at which the object attributes were measured and the reference time set in the management header part. In some embodiments of the disclosure, the *time Of Measurement* can be directly set as an absolute time value,
- the distance defined by *xDistance*, *yDistance,* and *zDistance* (optional), that corresponds to the distance between the perceived object and the reference position defined in the management header the in *x, y, z*-direction of the ITS-S coordinate system, respectively, at the time of measurement. In some embodiments of the disclosure, the distance can be replaced by the geographical coordinates of the objects,
- the speed defined by *xSpeed*, *ySpeed* and *zSpeed* (optional), which corresponds to the speed of the perceived object in the detecting ITS-S's reference system in the *x, y, z-*direction, respectively, at the time of measurement,
- the dimension (optional) defined by *planarObjectDimension1, planarObjectDimension2,* and *verticalObjectDimension,* which it represents the dimension of the perceived object, and/or
- *classification,* which provides the classification of the perceived object. It may be composed of an object class (e.g. vehicle class, Vulnerable Road User (VRU) class, etc.) and possibly a subclass (e.g. vehicle class has subclasses passengerCar, bus, etc.).

Likewise, the perceived area attributes may be similar to the one provided in the perception challenge request message, the values of which corresponding to the value measured by the on-board sensors of the SUT with some additional information such as which sensors were used to obtain the space area states:
- *areaID,* which is the identifier corresponding to the reference area in the perception challenge request message,
- *areaState,* which is the state of the area. Still for the sake of illustration, it may be expressed in a binary form where the 0-value indicates a free space area and the 1-value indicates an area containing perceived objects. According to another example, *areaState* corresponds to the number of objects perceived into the area. Still for the sake of illustration, the *areaState* value may be a *FreeSpaceAreaConfidence* value according to which the value 100 indicates a free space area with a confidence level of 100%, and/or
- *spaceArea*, which represents the geometry of the area. It can be defined using the Geographical Area Definition of the space according to ETSI EN 302 931 standard (for example in its version V1.1.1 dated July 2011) or using a list of nodes and reference geographic reference points (e.g., of the WGS84 North type) as defined in ISO 19061 standard.

According to some embodiment, the items that are not perceived may be explicitly reported using at least some of the following items of information in the perception challenge response message:
- *objectID* or *areaID,* which is an identifier corresponding to the reference object or reference area given in the perception challenge request message,
- *reason,* which provides, if it is available, the reason why the object or the area cannot be perceived, for example one of the following reasons:
   ∘ an occlusion,
   ∘ the characteristics of the sensors that are used to perceive objects or to determine the state of an area (e.g., the sensors are not able to perceive this type of object), and
   ∘ the object is out of the detection area.

### Requesting and responding to challenge tests

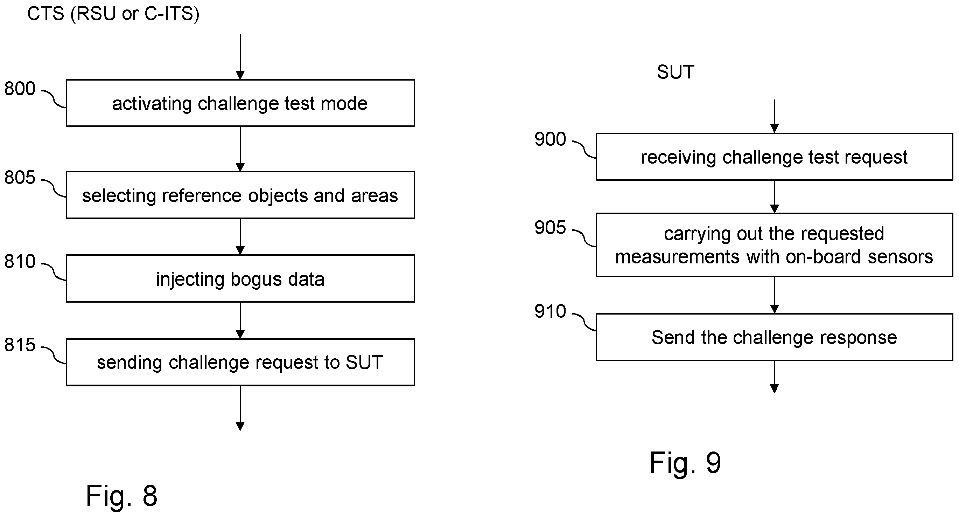

**Figure 8** illustrates an example of steps of a challenge test procedure initiated by a challenge test system which may by a central ITS station or a RSU, in the central ITS station or the RSU.

As illustrated, a first step is directed to activating the challenge test mode is activated (step 800). This activation may be triggered by a central ITS station or by a roadside ITS station (RSU) based on various criteria such as:
- a list of Authorization Tickets associated with ITS station to be challenged (e.g., a gray certificate list provided by Misbehavior Authorities before revoking certificates),
- a locally detected misbehavior (some examples of individual detectors for ITS Messages are provided in ETSI TS 103 759 standard, release 2, for Misbehavior Reporting service),
- maintenance operations triggered by brand OEM server of vehicles, and
- a systematic or random control triggered authorities.

Next, the reference objects and/or reference areas for the perception challenge request are selected (step 805). A first criterion to select reference objects and/or reference areas is the geographic criteria. The reference objects and/or reference areas are selected based on the geographical position of the SUT and of its detection area. As described above, the SUT detection area may be obtained through the content of Sensor Information within the CPM regularly transmitted by this SUT. If the detection area of the SUT cannot be obtained prior to sending the perception challenge request message, a default detection area may be used. For example, it may be defined as a circular area around the SUT with a certain distance (e.g. 50 m) or as a plurality of polygon areas corresponding to typical front, lateral and/or rear sensor detection areas of a vehicle.

In addition, the reference objects may be selected from a list of objects perceived by the RSU monitoring the area where is positioned the SUT, that is managed in real-time, or from a ground-truth stationary object list comprising road signs, traffic light poles, specific test patterns, and the like.

Accordingly, malicious ITS stations that are not located at the claimed position cannot easily respond to the perception challenge request. Adding object types such as road signs, that can be perceived by vehicle on-board sensors, but that are not included in the non-encrypted broadcast ITS messages avoids malicious ITS station to answer with plausible data obtained from other ITS station ITS messages.

Next, as supplementary measures to detect malicious ITS stations, data corresponding to bogus objects (or fake objects) and/or bogus areas (or fake areas) may be added to the lists of reference objects and reference areas (step 810). For the sake of illustration, adding data corresponding to a bogus object may comprise adding data corresponding to a non-existing object or modifying the attributes of an existing object (e.g., changing the object classification, changing the object position or speed, etc.). It is noted that the algorithm used to decide whether bogus data are to be added to the perception challenge request message and which bogus data are to be added should not be disclosed so that malicious SUTs cannot be aware of the bogus data that are added. As described herein above, using encrypted messages for the challenge request - response is advantageous since a malicious SUT cannot analyze such messages when it is not the targeted SUT.

Next, the Challenge Test System (e.g., CIS 180 or RSU 111 in Figure 1) sends the perception challenge request message containing the reference object list as processed during steps 805 and 810 to the SUT (step 815).

**Figure 9** illustrates an example of steps of a challenge test procedure, in an ITS Station Under Test.

As illustrated, a first step is directed to receiving a perception challenge request message (step 900) from a Challenge Test System (e.g., CIS 180 or RSU 111 in Figure 1). Next, the received perception challenge request message is processed and on-board sensors of the RSU are used to carry out measurements in order to perceive the reference objects and reference areas listed in the received perception challenge request message (step 905).

Next, a perception challenge response message is generated and transmitted to the Challenge Test System (step 910). As disclosed above, the perception challenge response message comprises a list of perceived objects and of the state of areas belonging to the lists of reference objects and reference areas of the received perception challenge request message. In addition, the perception challenge response message may comprise a list of non-perceived items (objects and/or areas).

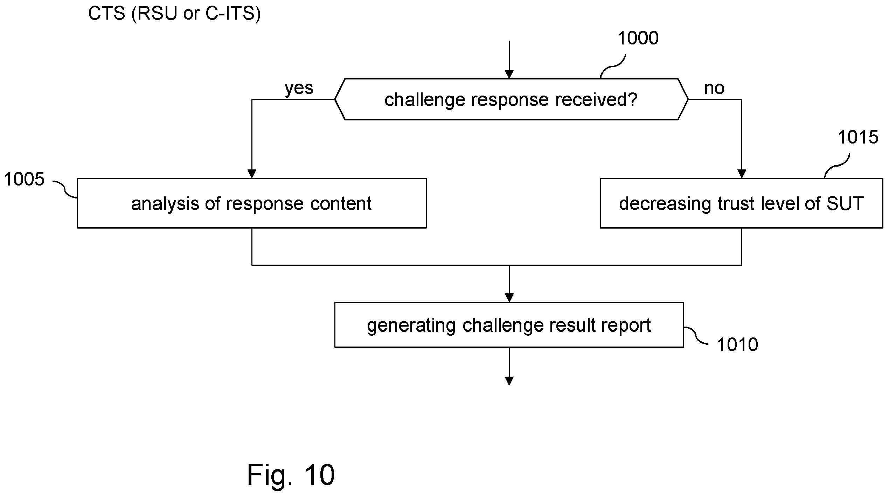

**Figure 10** illustrates an example of steps of a challenge test procedure, in a Challenge Test System, to process a perception challenge response message received from a SUT.

After a perception challenge request message has been sent to an ITS station under test, the Challenge Test System waits for a response to the request from the SUT (step 1000). If a perception challenge response message is received within a time slot following the transmission of the perception challenge request message, which may be a predetermined time slot whose value is, for example, comprises between 0.1 and 2 seconds, the response is analyzed (step 1005). According to some embodiments, analyzing a perception challenge response message comprises comparing the list of perceived objects of the perception challenge response message with the list of reference objects of the perception challenge request message and comparing the list of areas states of the perception challenge response message with the list of reference areas of the perception challenge request message.

Next, a challenge result report is generated (step 1010).

It is noted that according to some embodiments the step of analyzing the perception challenge response message is carried out by a RSU that generates a challenge result report comprising results of the analysis, which is transmitted to a central ITS station. According to some other embodiments, the step of analyzing the perception challenge response message is carried out by a central ITS station. In such cases, the RSU may generate a challenge result report comprising the perception challenge response message (or portions of the perception challenge response message), which is transmitted to the central ITS station for being analyzed by the latter.

For the sake of illustration, if the lists of items (objects and/or areas) of the perception challenge response message do not match the lists of items (objects and/or areas) of the perception challenge request message, analysis results may be the following:
- if bogus data that have been voluntarily added to a perception challenge response message (e.g., at step 810 in Figure 8) are also contained in the corresponding perception challenge response message, the probability that the SUT is a malicious ITS station is very high. Indeed, this means that the SUT is a malicious ITS Station just repeating the received data and that the SUT is not located where it claims to be or that it does not have the perception capabilities claimed in the CPMs it generates. As a consequence, a mitigation action may consist in generating a Misbehavior Report (MR), for example as defined in ETSI TS 103 759, release 2,
- if some data of the perception challenge response message correspond to objects that are badly positioned or badly classified and that the perception challenge response message does not comprise any bogus data added to the corresponding perception challenge request message (e.g., at step 810 in Figure 8), there is a high probability that there are some malfunctioning sensors in the SUT. As a consequence, a mitigation action may comprise generating a malfunction report (e.g., a proprietary message) to a OEM server in charge of the SUT ITS Station maintenance to trigger a maintenance operation (e.g., to repair the malfunctioning sensors). In addition, the mitigation action may comprise stopping transmission of CPMs from the SUT to avoid a revocation of the SUT Authorization Tickets.

If a perception challenge response message is not received within a time slot following the transmission of the perception challenge request message (step 1000), the trust level of the SUT may be decreased (step 1015). Such modification of trust level for this SUT is advantageously reflected in the challenge result report (step 1010), enabling a central ITS station to reference SUTs having a low trust level in a gray list of ITS stations. This makes it possible, for a given SUT, to generate a Misbehavior Report after several unsuccessful attempts to obtain a perception challenge response message to a perception challenge request message.

It is noted that a requirement to respond, for a SUT, could be brand-specific or may be decided by regulation and then controlled by authorities.

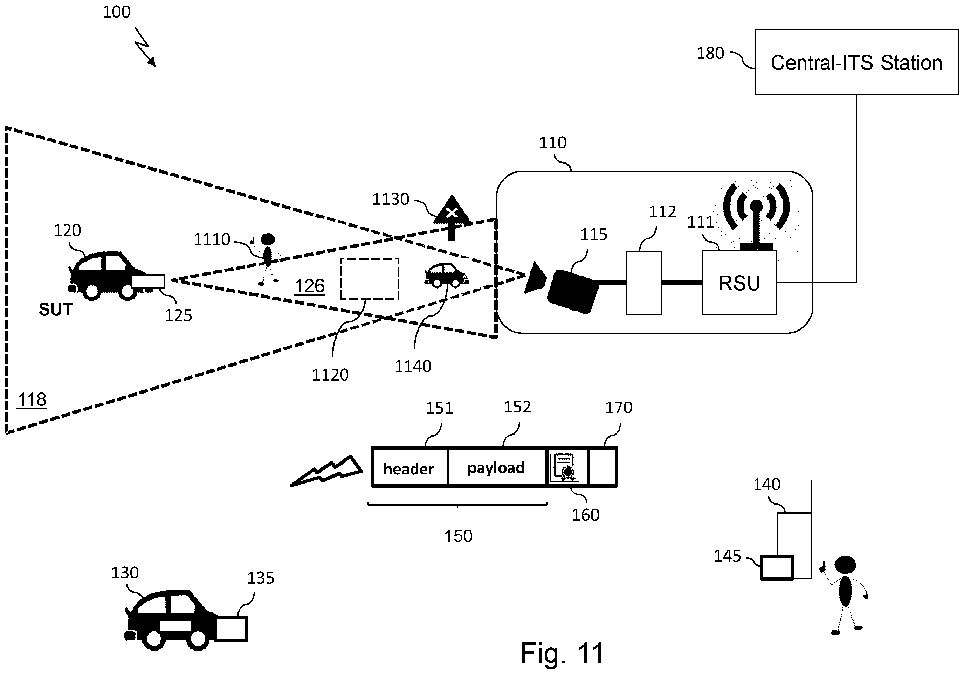

**Figure 11** illustrates an example of an ITS wherein several objects that perception can be requested to challenge a SUT are represented.

As illustrated, pedestrian 1110 is located in the intersection of monitoring area 118 with monitoring area 126, which means that pedestrian 1110 may be perceived by both RSU 111 and the ITS-S associated with vehicle 120. Accordingly, pedestrian 1110 may be used as a reference object to challenge the ITS-S associated with vehicle 120. Road sign 1130 is located in monitoring area 126. Since it is a stationary object, its position may be known by RSU 111. Accordingly, road sign 1130 may be used as a reference stationary object to challenge the ITS-S associated with vehicle 120. Likewise, area 1120 belongs to the intersection of the monitoring area 118 with the monitoring area 126. Accordingly, it may be used as a reference area to challenge the ITS-S associated with vehicle 120. In addition, a fake object (that does not actually exist) such as vehicle 1140 may be generated by a CTS and may be (virtually) located in the intersection of the monitoring area 118 with the monitoring area 126 to challenge the ITS-S associated with vehicle 120. It is noted here that a fake object may be located in the monitoring area of the SUT and outside the monitoring area of the RSU, but such arrangement is preferably avoided since the RSU cannot verify that the RSU does not confuse the fake object with a real object of which the RSU has no knowledge.

Therefore, a perception challenge request message may be generated by RSU 111 and transmitted to the ITS-S associated with vehicle 120 with references to reference objects 1110, 1130, and 1140 and to reference area 1120, to challenge the ITS-S associated with vehicle 120, as follow:

| | |
|---|---|
| Reference Object 1 | Pedestrian located at position 1110 |
| Reference Object 2 | Vehicle located at position 1140 |
| Reference Object 3 | Road sign located at 1130 |
| Reference Area 1 | Area 1120, state = free |

In the case according to which the SUT associated with vehicle 120 is an ITS-S equipped with a sensor (e.g., sensor 125) working properly, the Perception Challenge Response message may be the following:

| | |
|---|---|
| Sensor 1 | Detection area and sensor type of sensor 125 |
| Perceived Object 1 | Pedestrian located at position 1110, corresponding to reference object 1 |
| Perceived Object 2 | Road sign located at 1130, corresponding to reference object 2 |
| Perceived Reference Area 1 | Area 1120, state = free corresponding to reference area 1 |
| Not Perceived Items | Reference object 2 (vehicle located at position 1140) |

On the contrary, in the case according to which the SUT associated with vehicle 120 is a malicious ITS-S, the Perception Challenge Response message may be the following:

| | |
|---|---|
| Sensor 1 | Detection area and sensor type of sensor 125 |
| Perceived Object 1 | Pedestrian located at position 1110, corresponding to reference object 1 |
| Perceived Object 2 | Road sign located at 1130, corresponding to reference object 3 |
| Perceived Object 3 | vehicle located at 1140, corresponding to reference object 2 |
| Perceived Reference Area 1 | Area 1120, state = free corresponding to reference area 1 |

As apparent from this response, a fake object is deemed to be perceived, which is not possible. Accordingly, it may be concluded that the SUT is not reliable.

### Example of hardware to carry out steps of the method of embodiments of the present disclosure

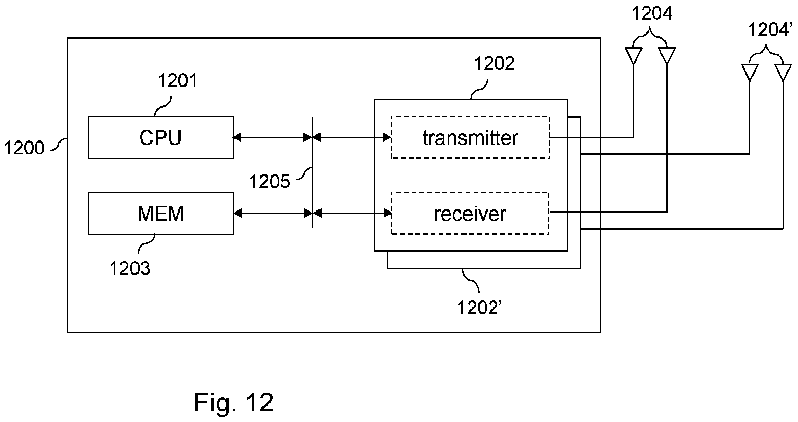

**Figure 12** schematically illustrates a communication device 1200 of an ITS, that may correspond to any of the vehicle, roadside, or VRU ITS stations in Figure 1, configured to implement at least partially, one or more of the embodiments of the present disclosure. Communication device 1200 may be a device such as a micro-computer, a workstation, or a light portable device. Communication device 1200 may comprise a communication bus 1205 to which may be connected:
- a central processing unit 1201, such as a processor, denoted CPU;
- a memory 1203, denoted MEM, for storing an executable code of methods or steps of the methods according to some embodiments of the disclosure as well as the registers adapted to record variables and parameters necessary for implementing the methods; and
- at least two communication interfaces 1202 and 1202' connected to the V2X network, for example a communication network according to 3GPP LTE- Advanced Pro, 3GPP 5G, or IEEE 802.11p technology, via transmitting and receiving antennas 1204 and 1204', respectively.

Preferably the communication bus 1205 may provide communication and interoperability between the various elements included in the communication device 1200 or connected to it. The representation of the bus is not limiting and in particular the central processing unit is operable to communicate instructions to any element of the communication device 1200 directly or by means of another element of the communication device 1200.

The executable code may be stored in a memory that may either be read only, a hard disk or on a removable digital medium such as for example a disk. According to an optional variant, the executable code of the programs can be received by means of the communication network, via the interface 1202 or 1202', in order to be stored in the memory 1203 of the communication device 1200 before being executed.

In an embodiment, the device 1200 may be a programmable apparatus which uses software to implement embodiments of the invention. However, alternatively, embodiments of the present invention may be implemented, totally or in partially, in hardware (for example, in the form of an Application Specific Integrated Circuit or ASIC).

Although the present invention has been described herein above with reference to specific embodiments, the present invention is not limited to the specific embodiments, and modifications will be apparent to a skilled person in the art which lie within the scope of the present invention.

Many further modifications and variations will suggest themselves to those versed in the art upon referring to the foregoing illustrative embodiments, which are given by way of example only and which are not intended to limit the scope of the invention, that being determined solely by the appended claims. In particular, the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method of communication in an intelligent transport system, ITS, comprising at an ITS test station:
sending to an ITS station, ITS-S, under test, SUT, different from the ITS test station, a request to report perception of objects within an area deemed to be monitored by the SUT, the request comprising items of information characterizing objects that perception is to be reported,
in response to the request, receiving an ITS message generated by the SUT, the ITS message comprising information directed to perception of objects as requested, and
based on the received ITS message, determining whether the SUT is misbehaving.

2. The method of claim 1, wherein the items of information characterizing objects that perception is to be reported comprise a list of one or more reference objects that perception is to be reported.

3. The method of claim 2, wherein the list of one or more reference objects comprises at least one reference object present in the area deemed to be monitored by the SUT.

4. The method of any one of claims 1 to 3, wherein the area deemed to be monitored by the SUT is monitored by the ITS test station.

5. The method of claim 4, depending on claim 3, wherein the received ITS message comprises a reference to at least one reference object of the list of one or more reference objects and location information of the at least one reference object, the SUT being determined as malfunctioning in response to determining that the location of the at least one reference object as known by the ITS test station is different from the location of the at least one reference object as determined by the SUT.

6. The method of any one of claims 1 to 5, wherein the items of information characterizing objects that perception is to be reported comprise a list of one or more reference areas wherein presence of objects is to be reported.

7. The method of claim 6, wherein the received ITS message comprises an indication as to whether objects are perceived by the SUT in a reference area of the list of one or more reference areas, the SUT being determined as malfunctioning in response to determining that a number of objects perceived by the SUT in the reference area is different from a number of objects in the reference area as known by the ITS test station.

8. The method of any one of claims 2, 3, and 4 to 7 depending on claim 2, wherein the list of one or more reference objects comprises at least one reference fake object not present in the area deemed to be monitored by the SUT.

9. The method of claim 8, wherein the behavior of the SUT is determined as being malicious in response to identifying a reference to the at least one reference fake object in the received ITS message.

10. The method of any one of claims 2, 3, and 4 to 9 depending on claim 2, wherein the list of one or more reference objects comprises at least one reference stationary object present in the area deemed to be monitored by the SUT.

11. The method of claim 10, wherein the SUT is determined as malfunctioning or as being malicious in response to determining that the received ITS message does not comprise any reference to the at least one reference stationary object.

12. The method of claim 10, wherein the received ITS message comprises a reference to the at least one reference stationary object and location information of the at least one reference stationary object, the SUT being determined as malfunctioning in response to determining that the location of the at least one reference stationary object as determined by the SUT is not correct.

13. The method of any one of claims 1 to 12, further comprising identifying the area deemed to be monitored by the SUT, as a function of ITS messages previously received from the SUT.

14. The method of claim 13, wherein the behavior of the SUT is determined as being malicious in response to determining that the received ITS message comprises a perceived object and location information of the perceived object and to determining that the perceived object is located outside the identified area.

15. A method of communication in an intelligent transport system, ITS, comprising at an ITS station, ITS-S, under test, SUT:
receiving, from an ITS test station, different from the SUT, a request to report perception of objects within an area deemed to be monitored by the SUT, the request comprising items of information characterizing objects that perception is to be reported,
carrying out measurements using at least one on-board sensor to perceive objects as requested, and
generating and transmitting to the ITS test station an ITS message, the ITS message comprising information directed to perceived objects.

16. The method of claim 15, wherein the generated ITS message comprises information directed to an object referenced in the received request, the object referenced in the received request being not perceived by the SUT.

17. The method of claim 15 or claim 16, wherein the area deemed to be monitored by the SUT is not monitored by the SUT.

18. A computer program product for a programmable apparatus, the computer program product comprising a sequence of instructions for implementing each of the steps of the method according to any one of claims 1 to 17 when loaded into and executed by the programmable apparatus.

19. A non-transitory computer-readable storage medium storing instructions of a computer program for implementing each of the steps of the method according to any one of claims 1 to 17.

20. An Intelligent Transport System, ITS, station, ITS-S, comprising a processing unit configured for carrying out each of the steps of the method according to any one of claims 1 to 17.

21. A message to transmit information in an Intelligent Transport System, ITS, comprising a request to report perception of objects within an area deemed to be monitored by a receiving ITS station, the request comprising items of information characterizing objects that perception is to be reported.
